# DEMANDE DE BREVET EUROPEEN

(11) **EP 1 596 120 A1**
(43) Date de publication de la demande: **16.11.2005**
(21) Numéro de dépôt: 05290924.9
(22) Date de dépôt: 27.04.2005
(51) Int. Cl.: F16L 55/28

(54) **Dispositif insérable dans une canalisation, à capacité accrue de maintien en place**

(30) Priorité: 11.05.2004 FR 0405095
(71) Demandeur: GAZ DE FRANCE, 75017 Paris (FR)
(72) Inventeur: Pineau, Sylvain, Résidence Le Bel Air, 91230 Montgeron (FR); Ohier, André, 20113 Olmeto (FR)
(74) Mandataire: Bentz, Jean-Paul

(57) **Abrégé**

L'invention concerne un dispositif destiné à être introduit dans une canalisation (1) de circulation d'un fluide et comprenant un élément fonctionnel (2), une tige centrale de liaison (6) et une pluralité de pattes radiales (3), ces pattes étant reliées à l'élément fonctionnel (2) à travers la tige de liaison (6) et se déployant, sous l'effet d'une force élastique, à la manière des baleines d'un parapluie, pour prendre appui sur l'intérieur de la canalisation (1).

Selon l'invention, les pattes (3) sont montées à rotation sur une même chape (4), et la force élastique est au moins partiellement constituée par un couple de rotation exercé sur les pattes au moyen d'organes d'appui (5) par exemple constitués par un ressort axial (52) poussant une rondelle de butée (51) montée coulissante sur la tige de liaison (6).

## Description

L'invention concerne, de façon générale, les techniques relatives à l'exploitation de réseaux de canalisations, et notamment de canalisations de gaz.

Plus précisément, l'invention concerne un dispositif de sécurité, de contrôle, de mesure et / ou de surveillance apte à être introduit dans une canalisation destinée à guider un écoulement de fluide orienté d'amont en aval, ce dispositif comprenant un élément fonctionnel propre à remplir la fonction principale du dispositif, un élément de retenue pour maintenir l'élément fonctionnel en place dans la canalisation, et une tige centrale de liaison reliant l'un à l'autre l'élément fonctionnel et l'élément de retenue, l'élément de retenue comprenant une pluralité de pattes radiales régulièrement réparties autour de la tige de liaison et présentant chacune une extrémité liée à la tige de liaison et une extrémité libre, ces pattes étant élastiquement sollicitées dans un sens propre à se déployer, à la manière des baleines d'un parapluie et à contre-courant de l'écoulement, depuis une position repliée dans laquelle ces pattes sont relativement proches de la tige de liaison jusque dans une position déployée dans laquelle ces pattes sont en appui sur la canalisation et relativement éloignées de la tige de liaison par leurs extrémités libres respectives, tout en formant avec la tige de liaison un angle inférieur à 90 degrés.

Un dispositif de ce type, en l'occurrence destiné à la sécurité, est notamment décrit dans la demande de brevet EP 1 388 697 émanant du même déposant.

Bien que présentant d'indéniables qualités, ce dispositif connu, dans lequel les pattes se déploient par l'effet de leur élasticité propre, s'est avéré n'offrir qu'une force de blocage insuffisante pour résister à la pression du fluide sans risque de migration à l'intérieur de la canalisation.

Bien qu'il soit a priori envisageable d'augmenter cette force de blocage en donnant aux extrémités libres des pattes des profils agressifs présentant une force de frottement élevée dans la conduite, cette approche est incompatible avec le besoin de respecter l'intégrité de la conduite, en particulier lorsque cette dernière est réalisée en polyéthylène.

L'invention, qui se situe dans ce contexte, a pour but de proposer un dispositif susceptible d'être inséré dans une canalisation et de s'y maintenir en place sans dommage pour cette canalisation.

A cette fin, le dispositif de l'invention, par ailleurs conforme à la définition générique qu'en donne le préambule ci-dessus, est essentiellement caractérisé en ce que l'élément de retenue comprend une chape liée à la tige de liaison et des moyens d'appui, en ce que les pattes sont montées à rotation sur la chape par leurs extrémités liées respectives autour d'axes d'articulation respectifs, et en ce que chaque patte reçoit de la part des moyens d'appui une force élastique ayant au moins une composante active perpendiculaire à cette patte et exerçant sur cette patte un couple de rotation qui la sollicite vers sa position déployée.

Grâce à cet agencement, l'élément de retenue peut développer une force de blocage importante tout en gardant un très faible encombrement, ce qui d'une part limite la perte de charge que représente le dispositif dans la canalisation et ce qui d'autre part évite le recours à des profils de pattes en griffes, qui risquent d'endommager la canalisation.

Les moyens d'appui comprennent par exemple une rondelle de butée montée coulissante sur la tige de liaison et en appui glissant sur un bord interne de chacune des pattes, et un ressort dont une première extrémité est fixe par rapport à la tige de liaison et dont une seconde extrémité appuie élastiquement la rondelle de butée contre les bords internes respectifs des pattes.

Le bord interne de chaque patte peut avantageusement présenter une variation de pente formant une protubérance que parcourt la rondelle de butée lors du passage de cette patte de sa position repliée à sa position déployée, de sorte que, pour un même déplacement de la rondelle de butée, les pattes pivotent d'un angle plus petit avant que la rondelle de butée n'atteigne la protubérance que lorsque la rondelle de butée a dépassé cette protubérance.

De préférence, chaque patte forme, à distance de son extrémité liée, au moins une aile, et chaque aile de chaque patte présente, à différentes distances de l'extrémité liée de cette patte, des inclinaisons différentes par rapport à un plan perpendiculaire à l'axe d'articulation de cette patte, chaque aile épousant ainsi la forme interne de la canalisation en position déployée de la patte.

En pratique, il est préférable de prévoir que chaque patte forme deux ailes symétriques l'une de l'autre par rapport au plan perpendiculaire à l'axe d'articulation de cette patte.

Chaque patte est par exemple formée d'un ou plusieurs flans métalliques découpés et pliés.

Le dispositif de l'invention peut aussi comprendre, au-delà de la chape par rapport à la tige de liaison, une tige de butée flexible présentant une extrémité liée à la chape et une extrémité libre, cette tige de butée permettant de guider le dispositif dans la canalisation et de déterminer la position du dispositif par butée sur un obstacle prédéterminé.

Pour réduire la perte de charge introduite par le dispositif, la tige de butée est de préférence terminée, à son extrémité libre, par un embout conique.

Par ailleurs, pour éviter tout saut brusque de diamètre, susceptible de provoquer le coincement du dispositif sur un obstacle partiel de la canalisation, il peut être utile de prévoir que la tige de butée s'élargisse progressivement à son extrémité liée en s'évasant vers la chape.

Le dispositif de l'invention est notamment applicable au cas où l'élément fonctionnel est constitué par une vanne de sécurité propre à obturer la canalisation si l'écoulement de fluide dépasse un débit prédéterminé.

L'invention concerne également un procédé de mise en place, dans une canalisation, d'un dispositif tel que précédemment défini, ce procédé étant caractérisé en ce qu'il comprend une phase préparatoire consistant à insérer au moins l'élément fonctionnel et les pattes repliées de l'élément de retenue dans une extrémité ouverte d'un fourreau dont une extrémité opposée est liée à une gaine creuse et renferme un vérin, une phase d'insertion consistant à insérer et à faire progresser dans la canalisation le fourreau et le dispositif qu'il emporte, en poussant la gaine dans la canalisation, et une phase de libération consistant, une fois atteinte une position de destination du dispositif, à éjecter ce dispositif hors du fourreau en alimentant le vérin à travers la gaine creuse.

Dans le cas particulier où le dispositif est doté d'une tige de butée et mis en place dans une canalisation de gaz comprenant un tuyau de branchement et une prise de branchement, le procédé de l'invention comprend, avant la phase de libération, une phase de détermination de la position de destination du dispositif mise en oeuvre par détection de la butée de la tige de butée contre une paroi transversale de la prise de branchement, la phase de libération libérant alors les pattes dans le tuyau de branchement.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe axiale d'un dispositif conforme à l'invention, représenté avant son insertion dans une canalisation;
- la figure 2 est une vue en coupe axiale d'un dispositif conforme à l'invention, représenté après son insertion dans une canalisation;
- la figure 3 est une vue de côté d'une partie d'un dispositif conforme à l'invention;
- la figure 4 est une vue de côté agrandie d'un flan métallique réalisé pour constituer une patte d'un dispositif conforme à l'invention;
- la figure 5 est une vue de face agrandie d'une patte d'un dispositif conforme à l'invention;
- la figure 6A est un schéma représentant partiellement un dispositif conforme à l'invention, inséré dans une canalisation, et dont les pattes sont en cours de déploiement;
- la figure 6B est un schéma représentant partiellement un dispositif conforme à l'invention, inséré dans une canalisation, et dont les pattes se sont déployées;
- la figure 7 est une vue en perspective agrandie d'une chape utilisée dans un dispositif conforme à l'invention;
- la figure 8 est une vue en coupe d'une canalisation dans laquelle est installé un dispositif conforme à l'invention; et
- la figure 9 est un schéma représentant partiellement un branchement de distribution de gaz susceptible d'utiliser un dispositif conforme à l'invention.

Comme annoncé précédemment, l'invention concerne un dispositif destiné à être introduit dans une canalisation 1 dans laquelle un fluide liquide ou gazeux s'écoule depuis l'amont X- de la position occupée par ce dispositif, vers l'aval X+ de cette position.

Ce dispositif comprend tout d'abord un élément fonctionnel 2 qui est propre à remplir la fonction principale de ce dispositif, et qui peut notamment remplir une fonction de sécurité, de contrôle, de mesure et / ou de surveillance.

Par exemple, l'élément fonctionnel 2 peut être constitué par une vanne de sécurité propre à obturer la canalisation 1 dans le cas où l'écoulement de fluide dépasse un débit prédéterminé, en particulier dans le cas d'une canalisation de gaz, comme décrit dans le document de brevet EP 1 388 697 précité.

En plus de l'élément fonctionnel 2, le dispositif de l'invention comprend un élément de retenue, qui sera détaillé ultérieurement et qui sert à maintenir l'élément fonctionnel 2 en place dans la canalisation 1, et une tige centrale de liaison 6 qui relie l'un à l'autre l'élément fonctionnel 2 et l'élément de retenue.

De façon connue, cet élément de retenue comprend notamment une pluralité de pattes radiales 3 régulièrement réparties autour de la tige de liaison 6, chacune de ces pattes 3 présentant une extrémité 31 liée à la tige de liaison 6, et une extrémité libre 32.

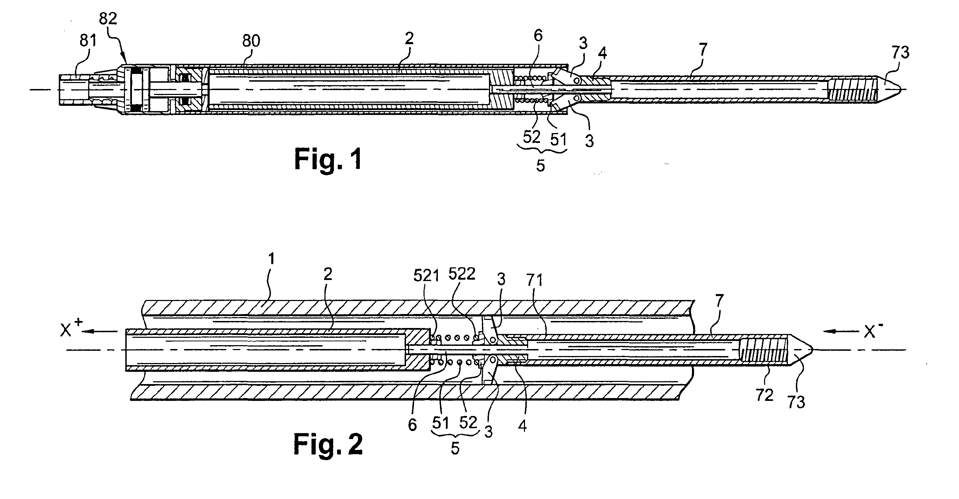

Les pattes 3 sont élastiquement sollicitées dans un sens propre à se déployer, à la manière des baleines d'un parapluie et à contre-courant de l'écoulement de X- vers X+, depuis une position repliée visible sur la figure 1 et dans laquelle ces pattes 3 sont relativement proches de la tige de liaison 6, jusque dans une position déployée visible sur la figure 2.

Bien que l'angle formé entre la tige de liaison 6 et les pattes 3 dans leur position déployée reste inférieur à 90 degrés, les extrémités libres respectives 32 des pattes 3, dans la position déployée de ces pattes, sont suffisamment éloignées de la tige de liaison 6 pour pouvoir être en appui sur l'intérieur de la canalisation 1.

Selon l'invention, l'élément de retenue comprend, en plus des pattes 3, une chape 4 et des moyens d'appui 5.

La chape 4 est liée à la tige de liaison 6 et les pattes 3 sont montées à rotation sur cette chape 4 par leurs extrémités liées respectives 31, autour d'axes d'articulation respectifs Y.

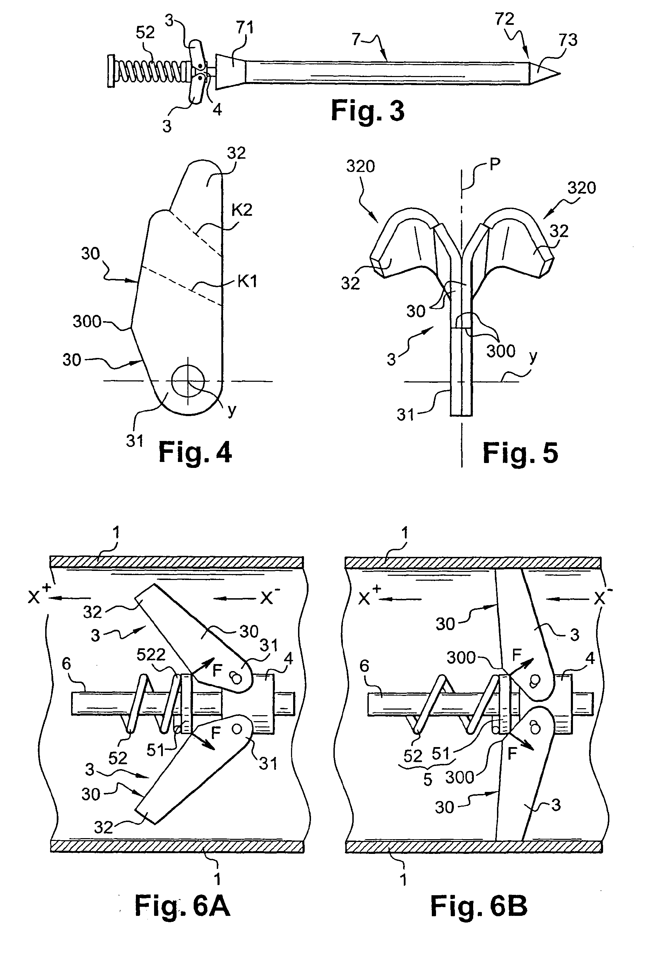

Par ailleurs, chaque patte 3 reçoit de la part des moyens d'appui 5 une force élastique dont au moins une composante active F (figures 6A et 6B) est perpendiculaire à cette patte 3 et exerce donc sur cette patte 3 un couple de rotation qui la sollicite vers sa position déployée.

Contrairement à ce que préconise le document de brevet EP 1 388 697 précité, les pattes 3 du dispositif de l'invention sont donc sollicitées par une force élastique externe, et de surcroît suivant un agencement permettant l'obtention d'une force élastique d'intensité élevée, les pattes 3 n'étant plus soumises, quant à elles, à l'obligation d'être réalisées dans un matériau intrinsèquement élastique.

L'angle formé entre la tige de liaison 6 et les pattes 3 en position déployée est de préférence supérieur à 60 degrés et, plus avantageusement encore, supérieur à 75 degrés.

Comme le montrent le mieux les figures 2, 6A et 6B, les moyens d'appui 5 comprennent par exemple une rondelle de butée 51 et un ressort 52.

La rondelle de butée 51 est montée coulissante sur la tige de liaison 6 et en appui glissant sur le bord interne 30 de chacune des pattes 3.

Le ressort 52, qui travaille par exemple en compression, présente une première extrémité 521, fixe par rapport à la tige de liaison 6, et une seconde extrémité 522 qui appuie élastiquement la rondelle de butée 51 contre les bords internes respectifs 30 des pattes 3.

Comme le montrent les figures 4, 6A et 6B, le bord interne 30 de chaque patte 3 peut présenter une variation de pente, cette variation de pente formant une protubérance 300 que parcourt la rondelle de butée 51 lors du passage de cette patte de sa position repliée à sa position déployée.

Comme le montrent les figures 4 et 5, chaque patte 3 est formée d'un ou plusieurs flans métalliques découpés et pliés et forme, à distance de son extrémité liée 31, une ou plusieurs ailes 320.

Par exemple, chaque patte 3 est formée de deux flans métalliques découpés et pliés et forme deux ailes 320 symétriques l'une de l'autre par rapport au plan P perpendiculaire à l'axe d'articulation Y de cette patte.

Chaque aile 320 présente, à différentes distances de l'extrémité liée 31 de cette patte 3, des inclinaisons différentes par rapport au plan P perpendiculaire à l'axe d'articulation Y de cette patte 3.

Dans le mode de réalisation illustré, les changements d'inclinaison sont obtenus en pliant chacun des deux flans métalliques de chaque patte 3 suivant deux plis K1 et K2, de façon symétrique par rapport au plan P.

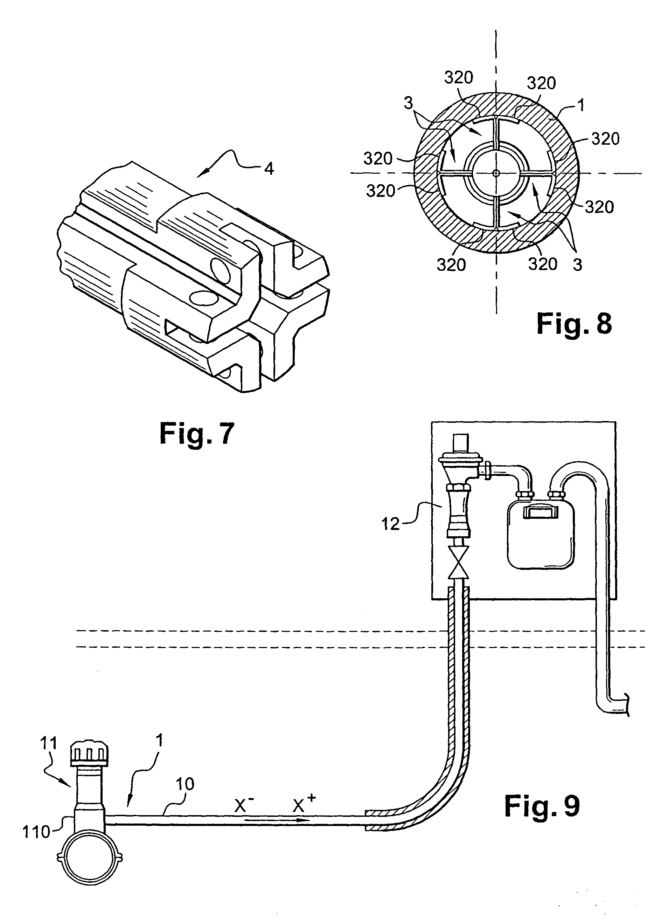

Chaque aile 320 de chaque patte 3 peut ainsi épouser fidèlement la forme interne de la canalisation 1 en position déployée de cette patte, comme illustré à la figure 8.

Comme le montrent les figures 1 à 3, le dispositif de l'invention comprend également une tige de butée 7 flexible présentant une extrémité 71 liée à la chape 4 et une extrémité libre 72, disposée à l'opposé de l'élément fonctionnel 2 et terminée par un embout conique 73 pour réduire les pertes de charge.

A son extrémité liée 71, la tige de butée 7 (figure 3) peut porter une bague tronconique de manière à s'élargir progressivement en s'évasant vers la chape 4, cette évolution progressive de diamètre favorisant le franchissement des obstacles par le dispositif.

La mise en place du dispositif dans la canalisation s'effectue, comme décrit dans le document de brevet EP 1 388 697 précité, au moyen d'un jonc flexible dont une extrémité porte un fourreau 80 (figure 1) transportant le dispositif jusqu'à sa position d'insertion dans la canalisation.

L'outil de mise en place est néanmoins perfectionné, conformément à l'invention, par l'ajout d'un vérin 82 disposé dans le fond du fourreau 80, et par l'ajout d'une gaine creuse 81 débouchant dans le vérin et susceptible de transporter un fluide d'alimentation du vérin 82.

Le procédé de mise en place du dispositif dans une canalisation 1 sera décrit ci-après en référence aux figures 1 et 9, cette dernière représentant une installation de distribution de gaz.

Une telle installation comprend typiquement une prise de branchement 11 alimentant en gaz un coffret de branchement 12 à travers un tuyau de branchement 10 qui constitue en l'occurrence la canalisation 1.

Tout d'abord, l'élément fonctionnel 2 et les pattes 3 du dispositif, placées en position repliée, sont introduits dans l'extrémité ouverte du fourreau 80, dont seul dépasse par conséquent la tige de butée 7.

L'ensemble constitué par la gaine 81, le vérin 82, le fourreau 80 et le dispositif est poussé dans le tuyau de branchement 10 en direction de la prise de branchement 11, par exemple à partir du robinet de branchement par l'intermédiaire d'un sas presse-étoupe permettant d'intervenir en charge.

Lorsque l'embout conique 73 vient buter sur la paroi transversale 110 de la prise de branchement 11, l'augmentation de la force nécessaire à la progression de l'ensemble dans la canalisation 1 indique que le dispositif a atteint sa position de destination.

Le vérin 82 est alors alimenté par injection de fluide moteur dans la gaine 81, ce qui provoque la libération du dispositif hors du fourreau 80.

Dès que les pattes 3 quittent ce fourreau, elles se déploient dans le tuyau de branchement 10, juste en aval de la prise de branchement 11, pour adopter la position définitive illustrée à la figure 2.

## Revendications

1. Dispositif de sécurité, de contrôle, de mesure et / ou de surveillance apte à être introduit dans une canalisation (1) destinée à guider un écoulement de fluide orienté d'amont (X-) en aval (X+), ce dispositif comprenant un élément fonctionnel (2) propre à remplir la fonction principale du dispositif, un élément de retenue (3, 4, 5) pour maintenir l'élément fonctionnel (2) en place dans la canalisation (1), et une tige centrale de liaison (6) reliant l'un à l'autre l'élément fonctionnel (2) et l'élément de retenue (3, 4, 5), l'élément de retenue (3, 4, 5) comprenant une pluralité de pattes radiales (3) régulièrement réparties autour de la tige de liaison (6) et présentant chacune une extrémité (31) liée à la tige de liaison (6) et une extrémité libre (32), ces pattes (3) étant élastiquement sollicitées dans un sens propre à se déployer, à la manière des baleines d'un parapluie et à contre-courant de l'écoulement, depuis une position repliée dans laquelle ces pattes (3) sont relativement proches de la tige de liaison (6) jusque dans une position déployée dans laquelle ces pattes (3) sont en appui sur la canalisation (1) et relativement éloignées de la tige de liaison (6) par leurs extrémités libres respectives (32), tout en formant avec la tige de liaison (6) un angle inférieur à 90 degrés, **caractérisé en ce que** l'élément de retenue (3, 4, 5) comprend une chape (4) liée à la tige de liaison (6) et des moyens d'appui (5), **en ce que** les pattes (3) sont montées à rotation sur la chape (4) par leurs extrémités liées respectives (31) autour d'axes d'articulation respectifs (Y), et **en ce que** chaque patte (3) reçoit de la part des moyens d'appui (5) une force élastique ayant au moins une composante active (F) perpendiculaire à cette patte (3) et exerçant sur cette patte (3) un couple de rotation qui la sollicite vers sa position déployée.

2. Dispositif suivant la revendication 1, **caractérisé en ce que** les moyens d'appui (5) comprennent une rondelle de butée (51) montée coulissante sur la tige de liaison (6) et en appui glissant sur un bord interne (30) de chacune des pattes (3), et un ressort (52) dont une première extrémité (521) est fixe par rapport à la tige de liaison (6) et dont une seconde extrémité (522) appuie élastiquement la rondelle de butée (51) contre les bords internes respectifs (30) des pattes (3).

3. Dispositif suivant la revendication 2, **caractérisé en ce que** le bord interne (30) de chaque patte (3) présente une variation de pente formant une protubérance (300) que parcourt la rondelle de butée (51) lors du passage de cette patte de sa position repliée à sa position déployée.

4. Dispositif suivant la revendication 2 ou 3,
**caractérisé en ce que** chaque patte (3) forme, à distance de son extrémité liée (31), au moins une aile (320), et **en ce que** chaque aile (320) de chaque patte (3) présente, à différentes distances de l'extrémité liée (31) de cette patte (3), des inclinaisons différentes par rapport à un plan (P) perpendiculaire à l'axe d'articulation (Y) de cette patte (3), chaque aile (320) épousant ainsi la forme interne de la canalisation (1) en position déployée de la patte (3).

5. Dispositif suivant la revendication 4, **caractérisé en ce que** chaque patte (3) forme deux ailes (320) symétriques l'une de l'autre par rapport au plan (P) perpendiculaire à l'axe d'articulation (Y) de cette patte.

6. Dispositif suivant l'une quelconque des revendications précédentes, **caractérisé en ce que** chaque patte (3) est formée d'au moins un flan métallique découpé et plié.

7. Dispositif suivant l'une quelconque des revendications précédentes, **caractérisé en ce qu'**il comprend, au-delà de la chape (4) par rapport à la tige de liaison (6), une tige de butée (7) flexible présentant une extrémité (71) liée à la chape (4) et une extrémité libre (72).

8. Dispositif suivant la revendication 7, **caractérisé en ce que** la tige de butée (7) est, à son extrémité libre (72), terminée par un embout conique (73).

9. Dispositif suivant la revendication 7 ou 8, **caractérisé en ce que** la tige de butée (7) s'élargit progressivement à son extrémité liée (71) en s'évasant vers la chape (4).

10. Dispositif suivant l'une quelconque des revendications précédentes, **caractérisé en ce que** l'élément fonctionnel (2) est constitué par une vanne de sécurité propre à obturer la canalisation (1) dans le cas où l'écoulement de fluide dépasse un débit prédéterminé.

11. Procédé de mise en place, dans une canalisation, d'un dispositif suivant l'une quelconque des revendications précédentes, **caractérisé en ce qu'**il comprend une phase préparatoire consistant à insérer au moins l'élément fonctionnel (2) et les pattes repliées (3) de l'élément de retenue (3, 4, 5) dans une extrémité ouverte d'un fourreau (80) dont une extrémité opposée est liée à une gaine creuse (81) et renferme un vérin (82), une phase d'insertion consistant à insérer et à faire progresser dans la canalisation le fourreau (80) et le dispositif qu'il emporte, en poussant la gaine (81) dans la canalisation (1), et une phase de libération consistant, une fois atteinte une position de destination du dispositif, à éjecter ce dispositif hors du fourreau (80) en alimentant le vérin (82) à travers la gaine creuse (81).

12. Procédé suivant la revendication 11 pour mettre en place un dispositif suivant la revendication 7 dans une canalisation (1) de gaz comprenant un tuyau de branchement (10) et une prise de branchement (11), **caractérisé en ce qu'**il comprend, avant la phase de libération, une phase de détermination de la position de destination du dispositif mise en oeuvre par détection de la butée de la tige de butée (7) contre une paroi transversale (110) de la prise de branchement (11), la phase de libération libérant alors les pattes (3) dans le tuyau de branchement (10).
